# EUROPEAN PATENT SPECIFICATION

(11) **EP 2 798 293 B1**
(45) Date of publication and mention of the grant of the patent: **12.06.2019**
(21) Application number: 12852464.2
(22) Date of filing: 27.12.2012
(51) Int. Cl.: F27B 1/10, C21B 5/00, C21B 5/06, F27B 1/18, F27B 1/24, F27D 17/00, C10K 1/00, C10K 1/02, C10K 3/04

(54) **METHOD OF PRODUCING MOLTEN IRON IN A BLAST FURNACE WITH TOP-GAS RECYCLE**
VERFAHREN ZUM HERSTELLEN VON EINEM EISENSCHMELZEN IM HOCHOFEN MIT GICHTGASRÜCKFÜHRUNG
PROCÉDÉ POUR LA PRODUCTION DE FONTE DANS UN HAUT-FOURNEAU AVEC RECYCLAGE DE GAZ DE GUEULARD

(30) Priority: 27.12.2011 US 201161580607 P
(43) Date of publication of application: 05.11.2014
(73) Proprietor: HYL Technologies, S.A. de C.V., Nuevo León, 66450 (MX)
(72) Inventor: GARZA-DAVILA, José-Carlos, 66220 San Pedro Garza Garcia N.L. (MX); BECERRA-NOVOA, Jorge-Octavio, 64610 Monterrey N.L. (MX); DUARTE-ESCARENO, Pablo-Enrique, 64610 Monterrey N.L. (MX)
(74) Representative: Hoffmann Eitle
(86) International application number: PCT/IB2012/003116
(87) International publication number: WO 2013/110969

(56) References cited:
- EP-A1- 2 574 683
- WO-A1-2010/057767
- CN-U- 202 786 280
- GB-A- 1 218 912
- JP-A- S55 113 814
- JP-A- S57 135 889
- JP-A- 2011 225 968
- US-A1- 2010 006 478
- WEI-HSIN CHEN ET AL: "An evaluation of hydrogen production from the perspective of using blast furnace gas and coke oven gas as feedstocks", INTERNATIONAL JOURNAL OF HYDROGEN ENERGY, ELSEVIER SCIENCE PUBLISHERS B.V., BARKING, GB, vol. 36, no. 18, 8 June 2011 (2011-06-08), pages 11727-11737, XP028271006, ISSN: 0360-3199, DOI: 10.1016/J.IJHYDENE.2011.06.049 [retrieved on 2011-06-22]
- TOORU MATSUMIYA: "Steelmaking technology for a sustainable society", CALPHAD. COMPUTER COUPLING OF PHASE DIAGRAMS AND THERMOCHEMISTRY, vol. 35, no. 4, 25 March 2011 (2011-03-25) , pages 627-635, XP028127046, ISSN: 0364-5916, DOI: 10.1016/J.CALPHAD.2011.02.009 [retrieved on 2011-03-11]
- NOGAMI H ET AL: "Simulation of blast furnace operation with intensive hydrogen injection", ISIJ INTERNATIONAL - GREEN ENERGY IRONMAKING AND STEELMAKING - PRODUCTION OF GREEN ENERGY AND ITS USE IN IRONMAKING AND STEELMAKING 2012 IRON AND STEEL INSITUTE OF JAPAN JPN, vol. 52, no. 8, 2012, pages 1523-1527, XP002713070, DOI: 10.2355/ISIJINTERNATIONAL.52.1523
- "BF Plus offers Steelmakers the complete package ...", , April 2011 (2011-04), XP002713071, Retrieved from the Internet: URL:http://www.airproducts.com/~/media/dow nloads/b/blast-furnace-plus/data-sheets/en -bf-plus-datasheet-338-10-002.pdf [retrieved on 2013-09-16]

## Description

### Field of the invention

The invention relates to the field of the iron and steel industry, more particularly to a more efficient method for production of liquid iron in blast furnaces, with reduced coke consumption by recycling upgraded top gas with an adjusted H₂/CO ratio.

### Background of the invention

In a blast furnace producing pig iron, iron ore is charged together with coke and fluxes. A hot air blast is injected through tuyeres at the bottom of the furnace, thereby generating heat by the combustion of carbon in the coke which melts down the charge. Periodically liquid iron and slag are tapped from the furnace. The combustion gases flow up through the furnace and reduce the iron oxides, and exit the furnace as a stream of dust-laden hot gas which from heat is recovered for preheating the air blast, and which is then normally used as fuel in other areas of the steel plant.

Metallurgical coke is needed in the charge of a blast furnace because this material (produced by pyrolysis of coal in coke ovens) provides the structural support of the charge of the furnace above the so-called "dead man" zone where the metallic iron starts melting and falling down to the bottom part of the furnace where molten iron and slag are collected. There is a minimum amount of coke which cannot be replaced by other fuels in order to assure the needed structural support of the charge.

Coke also provides the heat for melting the iron charge by its combustion with an oxygen containing gas, typically preheated air, the combustion gases, mainly composed of CO and CO₂, some H₂ and water flow upwardly through the shaft portion of the furnace and reduce the iron oxides to wustite (FeO). Final reduction of wustite to metallic iron at the conditions prevailing in the blast furnace is carried out by reaction with carbon (known in the art as "direct reduction").

Several proposals for recycling top gas in a blast furnace with the aim of reducing the coke rate, are found in the prior art. One of the problems to be solved is the nitrogen content of the top gas originating from the air blast. Another problem is the need for reheating the recycled gas prior to its being fed into the reduction area of the blast furnace, because the high content of CO causes carbon formation which may cause clogging and fouling of the reheating equipment and of the heating path equipment.

Applicants have found the following patents and patent applications concerning top gas recycle to a blast furnace:
U.S. Patent No. 3,460,934 to Kelmar discloses a method of making iron or steel in a blast furnace where pure oxygen is fed to the tuyeres instead of air. The high temperature developed by combustion of coke with oxygen is moderated by injecting with oxygen recycled gas, iron ore, limestone, coke or flue dust. Using oxygen instead of air eliminates the nitrogen in the top gas allowing recycling of the top gas.

U.S. Patent No. 3,784,370 to Stephenson teaches a method of operating a blast furnace in which the top gas is recycled. The top gas is cleaned in a dust collector and a static filter. Thereafter, the clean gas is stripped of nitrogen utilizing molecular sieves and then is heated to a temperature of about 2000°F = 1,093°C and recycled back to the tuyeres of the blast furnace, whereby the CO and H₂ contained in the recycled gas contribute to the reduction of iron ores lowering the coke consumption,

U.S. Patent No. 4,844,737 to Oono et al. discloses a blast furnace where pure oxygen instead of air is fed to the blast tuyeres along with pulverized coal, top gas is cleaned and cooled down and a portion thereof is heated and recycled to the middle portion of the shaft. No teaching is found of modifying the gas composition for decreasing the CO content and increasing the H₂ content in the recycled gas.

U.S. Patent No. 4,917,727 to Saito et al. describes a method of operating a blast furnace where pure oxygen instead of air is fed to the blast tuyeres along with pulverized coal, top gas is cleaned and cooled down and a portion thereof is heated and recycled to the middle portion of the shaft. No teaching is found of modifying the gas composition for decreasing the CO content and increasing the H₂ content in the recycled gas.

U.S. Patent No. 4,383,654 to Frederick et al. discloses a process for producing a reducing gas by partial combustion of oil and/or coal and/or coke for utilization in a direct reduction furnace or a blast furnace. This patent shows a blast furnace where air is used as blast for coke combustion and where in the off-gas of said blast furnace contains nitrogen. The top gas is cleaned and scrubbed and treated in a CO shifter for adjusting the CO content. CO₂ is removed from the shifted gas thus forming a Hydrogen-rich stream which is then heated to a temperature from 500°C to 700°C and the hot hydrogen is fed back to the blast furnace. This process has the drawback of needing a cryogenic plant for separating nitrogen contained in the top gas. Since the recycled stream is mainly hydrogen, the patent is mute regarding the coking, clogging and fouling problems in heaters when heating a gas containing CO.

U.S. Patent No. 5,234,490 to Kundrat describes a method of producing pig iron in a blast furnace where top gas is cleaned of dust and soot and then dehydrated and cooled down. A portion of the cooled and clean top gas is preheated to a temperature between 900°C and 1 000°C before it is recycled to the blast furnace for reducing the iron ore. However, the process of this patent is limited in the amount. This patent is mute about the recycled gas preheater and about the carbon deposits, clogging or fouling of heaters when heating a CO-containing gas.

U.S. Patent application No. 2010/0212457 A1 describes a blast furnace with air blast where a stream of hydrogen generated from the top gas is heated prior to being recycled. CO₂ is removed from the top gas and the CO is used for reducing a metal oxide which thereafter is used for generating hydrogen by oxidizing the reduced metal. The method of this patent does not have any problems relative to heating a CO-containing gas and the benefits of H₂/CO adjustment.

British Patent No. GB 1,218,912 discloses a blast furnace where preheated air blast is fed to the tuyeres so that the coke consumption is reduced while a reducing gas is generated by reaction of a hydrocarbon with off-gas of the blast furnace which is cleaned, washed and cooled down, mixed with a hydrocarbon, such as methane or naphta and heated in a tubular heater to 950°C and fed to the blast furnace for reducing the iron ores at a level above the blast tuyeres. This patent is mute regarding the elimination of nitrogen and about carbon deposit problems arising when a hydrocarbon is heated in tubular heaters.

Japanese Patent Publication No. JP55113814 describes a blast furnace where the consumption of coke is reduced by supplying fuel and oxygen fed as a gas blast through the lower tuyeres into the blast furnace. Top gas is treated to remove CO₂ therefrom, is heated, and is recirculated to the blast furnace. No teaching is found of modifying the gas composition for decreasing the CO content and increasing the H₂ content in the recycled gas. In "An evaluation of hydrogen production from the perspective of using blast furnace gas and coke oven gas as feedstocks" (W.-H.Chen e.a., International Journal of Hydrogen Energy, 36, 2011, pp.11727-11737) and "The Reduction of Wustite with high oxygen enrichment and high injection of hydrogenous fuel" (J.Li e.a., ISIJ International, vol.47, No.8, pp.1097-1101) the feasibility of BFG conversion and the efficiency of Wustite reduction are evaluated.

None of the above patents or patent applications teach or suggest that modifying the composition of the recycled top gas using a CO shift reactor to drastically reduce the coking problems of the heaters for the recycled gas. Solutions for this practical problem of the heaters and the possibility of utilizing tubular fired heaters for improving the operation of blast furnaces and allowing for a significant reduction of the overall CO₂ emissions are not envisioned in the prior art, while the present invention allows for the practical design and construction of new blast furnaces and revamping of existing blast furnaces with lower coke consumption.

### Objects of the invention

It is an object of the invention to provide a method for improving the operation of a blast furnace by upgrading and recycling top gas.

It is another object of the invention to provide a method for improving the operation of a blast furnace by decreasing the coke consumption per ton of iron produced.

It is a further object of the invention to provide a method for improving the operation of a blast furnace by decreasing the carbon dioxide emissions per ton of iron produced.

It is another object of the invention to provide a method for heating recycled top gas in tubular fired heaters minimizing the problems of carbon deposition, clogging or fouling of the heater and other equipment in the heating path of the CO-containing recycled gas.

Other objects of the invention will be evident for those skilled in the art or will be pointed out in the description of the invention.

### Summary of the invention

The objects of the invention in its broader aspects can be achieved by providing a method of producing iron in a blast furnace where the combustion of the coke is carried out by feeding oxygen to the tuyeres instead of air thereby avoiding a large nitrogen content in the top gas; withdrawing the top gas stream comprising CO, CO₂ and H₂; cleaning the top gas stream of dust and adjusting the volume ratio of H₂/CO in the top gas to the range between 1.5 to 4 by reaction with water; cooling the resulting top gas stream to remove water therefrom; removing CO₂ from a major portion of said cooled top gas stream, resulting in an effective reducing gas stream; heating said reducing gas stream to a temperature above 850°C, and feeding said hot reducing gas stream as a recycled reducing gas to the blast furnace. Removal of CO₂ from the cooled top gas stream may be carried out by absorption using an amines solution or carbonates solution or by physical adsorption in a pressure swing adsorption (PSA) or vacuum pressure swing adsorption (VPSA) unit. The resulting upgraded top gas is then heated to a temperature above 800°C and fed to the blast furnace, above the level where iron starts melting, for reducing the iron oxides charge to metallic iron.

The objects of the invention in its broader aspects can be achieved in a blast furnace system for producing molten iron in a blast furnace to which iron ore, metallurgical coke and fluxes are charged at its upper part and molten iron and slag are tapped from its lower part, said blast furnace having a plurality of tuyeres in its lower part for introducing an oxygen-containing gas for generating heat and reducing gases by combustion of the coke within said furnace characterized by comprising means for feeding oxygen instead of air through the tuyeres of said blast furnace; outlet means for withdrawing a top gas stream comprising CO, CO2 and H2; means for cleaning the top gas stream of dust connected to said outlet means; means for adjusting the volume ratio of H2/CO to the range between 1.5 to 4 by reaction with water; means for cooling said top gas stream for removing water therefrom; means for removing CO2 from a portion of said cooled top gas stream forming a CO2 lean reducing gas stream, means heating said reducing gas stream to a temperature above 850°C, and corresponding piping means connecting the components of said blast furnace system to recycle said hot reducing gas stream to said blast furnace.

### Brief description of the drawings

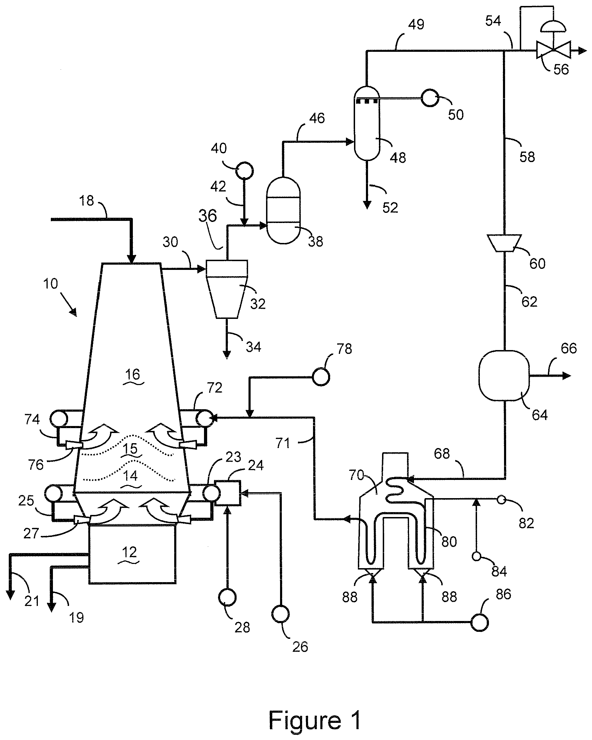

Figure 1 is a schematic process diagram showing a preferred embodiment of the invention.

### Detailed description of the invention

Referring to Figure 1, numeral 10 generally designates a blast furnace having a crucible section 12 where molten iron and slag are collected, a blast section 14 where the oxygen containing gases are introduced for carrying out the combustion of coke, and a shaft section 16 where iron ore particles in the form of sinter, pellets or lumps and mixtures thereof are charged along with coke, limestone and other fluxes 18, and next the iron oxides are reduced to wustite and finally to metallic iron as is known in the art. Molten iron 19 and slag 21 are periodically tapped from the bottom zone 12 of blast furnace 10.

Oxygen from a source 26 of industrial purity, instead of air is fed to mixing device 24 where a temperature moderating agent is fed from a source 28 for preventing the flame temperatures from reaching excessively high levels and therefore from damaging the blast nozzles in tuyeres 27. The temperatures moderating agents 28 may be for example, steam, carbon dioxide, oil, pulverized coal, coke fines or other hydrocarbon that will undergo an endothermic reaction with the oxygen and lower the temperatures to levels of about 2000°C to 2600°C. Also a portion of the top gas after treatment can be recycled to the tuyeres for moderating the high combustion temperature of oxygen with coke. Oxygen blast 26 combined with the moderating agent 28 are fed to header 23 and then through feeding pipes 25 to tuyeres 27.

The composition of top gas varies in a wide range depending on the characteristics of the materials charged to the blast furnace. The top gas effluent from the top of the blast furnace 10 exits through pipe 30 and is fed to a de-dusting device 32, where dusts from the charge and soot or other solid materials 34 are separated. The cleaned gas flows through pipe 36 to shift reactor 38 where the composition of the cleaned and cooled gas is adjusted to increase the hydrogen content so as to obtain a H₂/CO ratio of 1.5 to 4, preferably between 2 and 3 (measured by % volume). Steam 40 is supplied as the reactant for the shift reaction through pipe 42. The CO reacts with H₂O to form H₂ according to the reaction:

CO + H₂O → H₂ + CO₂

The reaction temperature is above about 300°C; so, if necessary, the top gas stream may be heated by means known in the art as a heat exchanger before being fed to shift reactor 38. The shifted gas is then passed through pipe 46 to a cooler/scrubber 48 with water 50 where the water content of the gas is condensed and extracted as water stream 52.

The de-watered gas then flows through pipe 49 from where a minor portion of the cleaned and dewatered gas 54 is purged from the recycle circuit through pipe having a pressure control valve 56 (for pressure control of, and for maintaining a N₂ concentration below 13% by volume in, the recycle circuit). A majority of the gas stream flows through pipe 58 to be recycled to the blast furnace 10. The purged gas 54 may be advantageously utilized as fuel in burners 88 for the gas heater 70 and optionally, if needed, may also be supplemented with other fuel as for example coke oven gas or natural gas 86.

The cleaned and dewatered reducing effluent gas is then transferred to compressor 60 through pipe 58 wherein its pressure is raised to a level suitable for further treatment prior to its ultimate recycling to blast furnace 10. In order to upgrade the reducing potential of the recycled reducing gas, the pressurized effluent gas flows through pipe 62 to an absorption tower 64 where CO₂ 66 is removed, leaving a reducing gas mainly composed of CO and H₂. The CO₂ lean gas is led through pipe 68 to heater 70 where its temperature is raised above 800°C. The resulting hot reducing gas is led through pipe 71 to header 72, and this recycled reducing gas is introduced into the shaft part 16 of the blast furnace through peripheral pipes 74 and nozzles 76. Oxygen from source 78 may be added to the hot reducing gas for further increasing the temperature of the reducing gas to between 1000° and 1100°C. A suitable fuel 86, for example natural gas or coke oven gas, is used in burners 88 of heater 70.

It is known that under the thermodynamic equilibrium conditions of the gas composition derived from the combustion of coke (mainly composed of CO, CO₂ and H₂), the reduction of the iron oxides progresses until wustite is formed. The continued reduction, of wustite to metallic iron, is carried out by the direct reduction reaction of carbon with FeO. Therefore, the amount of coke needed for reduction may only be decreased if more metallic iron reaches the blast furnace's dead-man zone 15, thus requiring less carbon for final reduction of wustite; in which case, since the heat for melting the charge may be obtained from fuels other than coke, then the coke rate can be effectively lowered. This approach of adjusting reducing gas composition of recycled gas as a mixture of hydrogen and CO has not been addressed in the prior art. Recycling of hydrogen only would not produce the same results, because hydrogen requires higher energy levels, while a proper combination of hydrogen and CO will efficiently reduce the wustite to metallic iron.

Removal of CO₂ from the cooled gas stream being recycled may be carried out by absorption using an amines solution or carbonates solution or by physical adsorption in a pressure swing adsorption (PSA) or vacuum pressure swing adsorption (VPSA) unit. Upgraded recycled top gas with an improved H2/CO ratio and high reduction potential (measured as the ratio of H₂ + CO / CO₂ + H₂O and having a value above 2), is heated in coils 80 of the heater 70 to a temperature above 800°C for reducing the iron oxides in the shaft section 16. The relatively high content of CO however, may produce carbon deposits by the reaction 2CO → C + CO₂ in the heating path of the recycled gas. Such carbon deposits may require that heater 70 be periodically shut down for cleaning such carbon residues to avoid clogging or fouling of coils 80 and other equipment where CO flows in the range where the thermodynamic conditions of the gas tend to produce elemental carbon.

In order to avoid the above mentioned production losses caused by the heater carbon cleaning, such cleaning may be done by shutting down, the heater 70 and passing steam 82, or steam and an oxidizing agent 84, which may be air or oxygen, through the heating tubes 80, whereby the carbon deposits are gasified and eliminated. A preferred and efficient way of performing such carbon cleaning is done by injecting said steam 82 with or without an oxidizing agent 84 only to one heating tube, or a group of heating tubes, of the heater 70 so that the overall reduction potential of the reducing gas composition fed to the blast furnace is not significantly affected by the increase in the amount of oxidants in said tubes 80. In this way, the carbon cleaning is done in-line without shutting down the heater 70 and avoiding production losses,

Although a tubular fired heater 70 is preferred, it will evident to those skilled in the art that the upgraded recycled gas stream may be heated using other types of heaters like ceramic heaters, also called regenerative heaters, as pebble heater, stoves similar to those used for heating the air blast for blast furnaces.

The present invention may be applied to either new or existing furnaces so as to provide the advantages of lower coke consumption per ton of molten iron and also making the blast furnace more environmentally friendly because the CO₂ removal from the recycled top gas allows for CO₂ utilization for other industrial purposes or for its sequestration. At the same time the lowered coke consumption decreases emission of CO₂ and other contaminants to the environment which coke ovens normally produce, thus decreasing the overall amount of CO₂ released to the atmosphere per ton of molten iron produced.

It is of course to be understood that in this specification only some preferred embodiments of the invention have been described for illustration purposes and that the scope of the invention is not limited by such described embodiments but only by the scope of the appended claims.

## Claims

1. Method of producing molten iron in a blast furnace to which iron ore, metallurgical coke and fluxes are charged at its upper part and molten iron and slag are tapped from its lower part, said blast furnace having a plurality of tuyeres in its lower part for introducing an oxygen-containing gas for generating heat and reducing gases by combustion of the coke within said furnace **characterized by**:
feeding oxygen instead of air through the tuyeres of said blast furnace;
withdrawing a top gas stream from said blast furnace comprising CO, CO₂ and H₂;
cleaning the top gas stream of dust and
adjusting the volume ratio of H₂/CO in the top gas to the range between 1.5 to 4 by reaction with water;
cooling the resulting top gas stream to remove water therefrom;
removing CO₂ from a portion of said cooled top gas stream forming a CO₂ - lean reducing gas stream,
heating said reducing gas stream to a temperature above 850°C, and
feeding said hot gas stream to said blast furnace at a point above said tuyeres contributing to the reduction of said iron ore to metallic iron.

2. Method of producing molten iron according to claim 1, further **characterized by** reacting said cleaned top gas in a catalytic reactor with steam at a temperature above 300°C for increasing said volume ratio of H₂/CO of said top gas.

3. Method of producing molten iron according to claim 1 or 2, further **characterized by** removing CO₂ from said cooled and cleaned top gas by absorption of the in an amine solution.

4. Method of producing molten iron according to claim 1 or 2, further **characterized by** removing CO₂ from said cooled and cleaned top gas by adsorption of the CO₂ in a Pressure Swing Adsorption unit.

5. Method of producing molten iron according to any one of the preceding claims, further **characterized by** heating said stream of recycled reducing gas in a direct fired tubular heater.

6. Method of producing molten iron according to claim 5, further **characterized by** injecting steam into the heater tubes for cleaning said tubes in which carbon deposits tend to form.

7. Method of producing molten iron according to claim 6, further **characterized by** injecting steam combined with an oxygen-containing gas for cleaning said tubes.

8. Method of producing molten iron according to claims 6 or 7, further **characterized by** cleaning said tubes one, or a small group of tubes, at a time, so that said injected steam does not significantly affect the reduction potential of the recycled reducing gas.

## Patentansprüche

1. Verfahren zur Herstellung von geschmolzenem Eisen in einem Hochofen, in den Eisenerz, metallurgischer Koks und Flussmittel an seinem oberen Teil eingebracht werden und geschmolzenes Eisen und Schlacke von seinem unteren Teil abgelassen werden, wobei der Hochofen eine Mehrzahl von Blasdüsen in seinem unteren Teil aufweist, um ein sauerstoffhaltiges Gas zum Erzeugen von Wärme und Reduktionsgasen durch Verbrennen des Kokses innerhalb des Ofens einzuführen, wobei das Verfahren **gekennzeichnet ist durch**:
das Zuführen von Sauerstoff anstelle von Luft **durch** die Blasdüsen des Hochofens;
das Abziehen eines Gichtgas-Stroms aus dem Hochofen, der CO, CO₂ und H₂ umfasst;
das Reinigen des Gichtgas-Stroms von Staub und
das Einstellen des Volumenverhältnisses von H₂/CO in dem Gichtgas auf den Bereich von 1,5 bis 4 **durch** Reaktion mit Wasser;
das Abkühlen des resultierenden Gichtgas-Stroms, um Wasser daraus zu entfernen;
das Entfernen von CO₂ aus einem Teil des abgekühlten Gichtgas-Stroms, um einen CO₂-armen Reduktionsgas-Strom zu bilden,
das Erhitzen des Reduktionsgas-Stroms auf eine Temperatur über 850°C, und
das Zuführen des heißen Gasstroms zu dem Hochofen an einem Punkt oberhalb der Blasdüsen, um zur Reduktion des Eisenerzes zu metallischem Eisen beizutragen.

2. Verfahren zur Herstellung von geschmolzenem Eisen gemäß Anspruch 1, weiterhin **gekennzeichnet durch** Reaktion des gereinigten Gichtgases mit Dampf in einem katalytischen Reaktor bei einer Temperatur über 300°C, um das Volumenverhältnis von H₂/CO des Gichtgases zu erhöhen.

3. Verfahren zur Herstellung von geschmolzenem Eisen gemäß Anspruch 1 oder 2, weiterhin **gekennzeichnet durch** das Entfernen von CO₂ aus dem abgekühlten und gereinigten Gichtgas durch Absorption des CO₂ in einer Aminlösung.

4. Verfahren zur Herstellung von geschmolzenem Eisen gemäß Anspruch 1 oder 2, weiterhin **gekennzeichnet durch** das Entfernen von CO₂ aus dem abgekühlten und gereinigten Gichtgas durch Adsorption des CO₂ in einer Druckwechsel-Adsorptionseinheit.

5. Verfahren zur Herstellung von geschmolzenem Eisen gemäß einem der vorhergehenden Ansprüche, weiterhin **gekennzeichnet durch** das Erhitzen des Stroms von rückgeführtem Reduktionsgas in einem direkt befeuerten röhrenförmigen Erhitzer.

6. Verfahren zur Herstellung von geschmolzenem Eisen gemäß Anspruch 5, weiterhin **gekennzeichnet durch** das Einblasen von Dampf in die Rohre des Erhitzers, um die Rohre zu reinigen, in denen sich Kohlenstoffablagerungen bilden können.

7. Verfahren zur Herstellung von geschmolzenem gemäß Anspruch 6, weiterhin **gekennzeichnet durch** das Einblasen von Dampf mit einem sauerstoffhaltigen Gas, um die Rohre zu reinigen.

8. Verfahren zur Herstellung von geschmolzenem Eisen gemäß Anspruch 6 oder 7, weiterhin **gekennzeichnet durch** das Reinigen der Rohre eines oder einer kleinen Gruppe von Rohren auf einmal, so dass der eingeblasene Dampf das Reduktionspotential des rückgeführten Reduktionsgases nicht wesentlich beeinflusst.

## Revendications

1. Procédé pour la production de fonte dans un haut fourneau dans lequel du minerai de fer, du coke métallurgique et des fondants sont chargés dans sa partie supérieure et de la fonte et des scories sont retirées dans sa partie inférieure, ledit haut fourneau ayant une pluralité de tuyères dans sa partie inférieure pour l'introduction d'un gaz contenant de l'oxygène pour générer de la chaleur et réduire des gaz par la combustion du coke à l'intérieur dudit haut fourneau **caractérisé en ce que** :
l'alimentation d'oxygène au lieu d'air à travers les tuyères dudit haut fourneau ;
le retrait d'un flux de gaz de tête dudit haut fourneau comprenant CO, CO₂ et H₂ ;
le nettoyage du flux de gaz de tête de la poussière et
l'ajustement du rapport en volume de H₂/CO dans le gaz de tête dans le domaine entre 1,5 et 4 par réaction avec de l'eau ;
le refroidissement du flux de gaz de tête résultant pour éliminer l'eau de celui-ci ;
l'élimination du CO₂ d'une portion dudit gaz de tête formant un flux de gaz réducteur maigre en CO₂,
le chauffage dudit flux de gaz réducteur à une température supérieure à 850°C, et
l'alimentation dudit flux de gaz chaud audit haut fourneau à un point au-dessus desdites tuyères contribuant à la rédaction dudit minerai de fer en fer métallique.

2. Le procédé pour la production de fonte selon la revendication 1, **caractérisé en outre par** la réaction dudit gaz de tête nettoyé dans un réacteur catalytique avec de la vapeur à une température supérieure à 300°C pour augmenter ledit rapport en volume de H₂/CO dudit gaz de tête.

3. Le procédé pour la production de fonte selon la revendication 1 ou 2, **caractérisé en outre par** l'élimination du CO₂ dudit gaz de tête nettoyé et refroidi par absorption du CO₂ dans une solution amine.

4. Le procédé pour la production de fonte selon la revendication 1 ou 2, **caractérisé en outre par** l'élimination du CO2 dudit gaz de tête nettoyé et refroidi par absorption du CO2 dans une unité d'adsorption modulée en pression.

5. Le procédé pour la production de fonte selon l'une quelconque des revendications précédentes, **caractérisé en outre par** la chauffage dudit flux de gaz réducteur recyclé dans un élément chauffant tubulaire à contact direct.

6. Le procédé pour la production de fonte selon la revendication 5, **caractérisé en outre par** l'injection de vapeur dans les tubes de l'élément chauffant pour nettoyer lesdits tubes dans lesquels des dépôts de carbone tendent à se former.

7. Le procédé pour la production de fonte selon la revendication 6, **caractérisé en outre par** l'injection de vapeur combinée avec un gaz contenant de l'oxygène pour le nettoyage desdits tubes.

8. Le procédé pour la production de fonte selon la revendication 6 ou 7, **caractérisé en outre par** le nettoyage desdits tubes un, ou un petit groupe de tubes, à la fois, de sorte que ladite vapeur injectée n'affecte pas significativement le potentiel réducteur du gaz réducteur recyclé.
